# EUROPEAN PATENT SPECIFICATION

(11) **EP 2 357 104 B1**
(45) Date of publication and mention of the grant of the patent: **25.09.2013**
(21) Application number: 09826011.0
(22) Date of filing: 23.10.2009
(51) Int. Cl.: B60K 1/04, B60K 11/06, B60L 9/18, H01M 2/10, H01M 10/50

(54) **VEHICLE POWER SOURCE UNIT COOLING STRUCTURE**
KÜHLSTRUKTUR FÜR EINE FAHRZEUGSTROMQUELLENEINHEIT
STRUCTURE DE REFROIDISSEMENT D'UNITÉ DE SOURCE DE PUISSANCE DE VÉHICULE

(30) Priority: 17.11.2008 JP 2008293101
(43) Date of publication of application: 17.08.2011
(73) Proprietor: Honda Motor Co., Ltd., Minato-ku Tokyo 107-8556 (JP)
(72) Inventor: KAWADA, Masao c/o HONDA R&D CO., LTD., Saitama 351-0193 (JP); TAKEDOMI, Harumi c/o HONDA R&D CO., LTD., Saitama 351-0193 (JP); SAKURAI, Takeshi c/o HONDA R&D CO., LTD., Saitama 351-0193 (JP)
(74) Representative: Beder, Jens
(86) International application number: PCT/JP2009/068287
(87) International publication number: WO 2010/055761

(56) References cited:
- EP-A1- 1 932 707
- EP-A1- 1 935 699
- WO-A2-2007/079449
- JP-A- 2004 345 451
- JP-A- 2005 324 771
- JP-A- 2005 324 771
- JP-A- 2006 318 820
- JP-A- 2007 022 350
- JP-A- 2008 062 780
- JP-A- 2008 062 780

## Description

### Technical Field

The present invention relates to a cooling structure for a vehicle power source unit, and more specifically relates to a cooling structure for a vehicle power source unit in which a power source unit including a battery, an inverter, and a DC/DC converter applied in a vehicle such as a hybrid automobile or the like is cooled using cooling wind.

### Background Art

For example, in a hybrid automobile, it is devised that a power source unit including a battery, an inverter, and a DC/DC converter which drive a motor for driving is disposed under a floor of a luggage space behind a backseat, and the power source unit is cooled using cooling wind sucked by a cooling fan (see, e.g., Patent Document 1).

### Prior Art Document

### Patent Document

Patent Document 1: Japanese Unexamined Patent Publication No. 2008-62780

### Summary of the Invention

### Problem to be Solved by the Invention

JP 2008-62780 discloses a cooling structure according to the preamble of claim 1.

By the way, in Patent Document 1, in order to protect the inverter and the DC/DC converter from an impact resulting from a fall of luggage in the luggage space, a space has been provided between a cover for the power source unit, the inverter, and the DC/DC converter, and deformation of the cover has been absorbed by the space. However, when such space is provided, because the height of the power source unit is increased, it has been difficult to secure the capacity of the luggage space.

The present invention has been achieved in view of the above-described circumstances, and an object thereof is to provide a cooling structure for a vehicle power source unit capable of cooling a battery and an electrical component including an inverter with a compact configuration.

### Means for Solving the Problem

In order to achieve the above-described object, the invention provides a cooling structure as defined by the features of claim 1 comprising a cooling structure for a vehicle power source unit (for example, a power source unit 10 in embodiments described later) constituted of a power storage device (for example, battery modules 24 ... in embodiments described later) and an electrical component disposed on a top of the power storage device and including at least an inverter (for example, an inverter 34 in embodiments described later) is disposed under a floor of a luggage room (for example, a luggage space 3 in embodiments described later) provided in a vehicle (for example, a hybrid vehicle 1 in embodiments described later), and a cooling path (for example, first and second cooling paths 50 and 51 in embodiments described later) for cooling the power storage device and the electrical component using cooling wind is formed in the power source unit, characterized in that the electrical component has an electrical component case (for example, an electrical component case 33 in embodiments described later) for accommodating the inverter, and a heat sink unit (for example, heat sink units 37 and 38 in embodiments described later) attached to the electrical component case on a side of the electrical component case opposite to a side with the power storage device and constituted of a heat radiating plate (for example, a heat radiating plate 40 in embodiments described later) having a plurality of heat radiating fins (for example, a heat radiating fin 39 in embodiments described later), and the cooling path has a first cooling path (for example, the first cooling path 50 in embodiments described later) for cooling the power storage device using the cooling wind, and a second cooling path (for example, the second cooling path 51 in embodiments described later) for cooling the heat sink unit using the cooling wind having passed through the first cooling path.

In addition to the configuration of the invention described in claim 1, the invention described in claim 2 is characterized in that a sub frame (for example, suspending frames 16 and 16 in embodiments described later) is attached to a pair of side frames (for example, rear side frames 12 and 12 in embodiments described later) disposed on both sides in a vehicle width direction such that the sub frame is substantially orthogonal to a longitudinal direction of each of the side frames, the power source unit is attached to the sub frame, and the sub frame has a portion (for example, a first horizontal portion 16a in embodiments described later) passing below the heat sink unit.

In addition to the configuration of the invention described in claim 2, the invention described in claim 3 is characterized in that the cooling path is so configured as to pass through the heat sink unit via an intermediate duct (for example, an intermediate duct 45 in embodiments described later) in a substantially U shape after passing through the power storage device, the sub frame has a plurality of sub frames, and at least one of the plurality of sub frames is disposed in a space (for example, a space S in embodiments described later) formed between the intermediate duct, the power storage device, and the electrical component.

In addition to the configuration of the invention described in claim 1, the invention described in claim 4 is characterized in that a sub frame is attached to a pair of side frames disposed on both sides in a vehicle width direction such that the sub frame is substantially orthogonal to a longitudinal direction of each of the side frames, the power source unit is attached to the sub frame, and the sub frame is disposed in the cooling path, and has a through hole (for example, a through hole 70 in an embodiment described later) for causing the cooling wind to pass therethrough.

In addition to the configuration of the invention described in any one of claims 1 to 4, the invention described in claim 5 is characterized in that a cover (for example, a lid member 15 in embodiments described later) for the power source unit forming a wall surface of the second cooling path is provided above the electrical component, and the heat sink unit has a fixing portion (for example, a boss portion 90 in an embodiment described later) for fixing the cover.

In addition to the configuration of the invention described in any one of claims 1 to 4, the invention described in claim 6 is characterized in that a cover for the power source unit forming a wall surface of the second cooling path is provided above the electrical component, and the cover has an inclined portion (for example, an inclined portion 15a in embodiments described later) inclined upwardly toward a downstream side of the second cooling path.

In addition to the configuration of the invention described in any one of claims 1 to 5, the invention described in claim 7 is characterized in that a bump portion (for example, a bump portion 32a in an embodiment described later) is provided on a downstream side of the first cooling path such that a flow path cross-sectional area is reduced, and the bump portion is formed on a surface on a power storage device side of the electrical component case.

### Effect of the Invention

According to the invention of claim 1, since a space protecting the electrical component is formed by the second cooling path, it is possible to reduce the height of the power source unit, and cool the power storage device and the electrical component including the inverter with a compact configuration. In addition, it is possible to dispose the electrical component case at a position close to the power storage device, and thereby lower the center of gravity.

According to the invention of claim 2, it is possible to cause the sub frame to pass below the second cooling path so that the thickness of the power source unit is not increased by the height of the sub frame, and it is possible to reduce the height of the power source unit, and lower the center of gravity.

According to the invention of claim 3, at least one of the plurality of sub frames can effectively utilize the dead space between the intermediate duct, the power storage device, and the electrical component, and the power source unit can be thereby reduced in size.

According to the invention of claim 4, the thickness of the power source unit is not increased by the height of the sub frame, and it is possible to reduce the height of the power source unit and cause the sub frame to receive heat so that cooling efficiency can be enhanced.

According to the invention of claim 5, it is possible to cause the cover to receive heat from the heat sink unit so that the cooling efficiency can be enhanced.

According to the invention of claim 6, warm air flows upwardly along the inclined portion so that a natural convection effect can be enhanced.

According to the invention of claim 7, it is possible to improve cooling performance by increasing a flow speed of the first cooling path using the bump portion, and formation of the bump portion by the electrical component case allows a reduction in the size of the power source unit.

### Brief Description of the Drawings

FIG. 1 is a perspective view of a power source unit for a hybrid vehicle to which the present invention is applied when viewed in an obliquely rearward direction of a luggage space;
FIG. 2 is a partial cross-sectional view of a rearward part of the vehicle of FIG. 1;
FIG. 3 is a cross-sectional view taken along the line III-III of FIG. 1;
FIG. 4 is a cross-sectional view taken along the line IV-IV of FIG. 1;
FIG. 5(a) is a top view of an upper electrical component case, while FIG. 5(b) is a partially enlarged side view thereof;
FIG. 6 is a cross-sectional view taken along the line VI-VI of FIG. 4;
FIG. 7 is a cross-sectional view in correspondence to FIG. 4 according to a second embodiment of the present invention;
FIG. 8 is a cross-sectional view in correspondence to FIG. 4 according to a third embodiment of the present invention; and
FIG. 9(a) is a top view of an upper electrical component case according to a modification of the present invention, while FIG. 9(b) is a partially enlarged side view thereof.

### Mode for Carrying Out the Invention

Hereinbelow, a detailed description will be given of each of embodiments of a cooling structure for a vehicle power source unit according to the present invention on the basis of the drawings. It is to be noted that the drawings are assumed to be viewed in accordance with orientations of reference numerals.

### <Fil-st Embodiment>

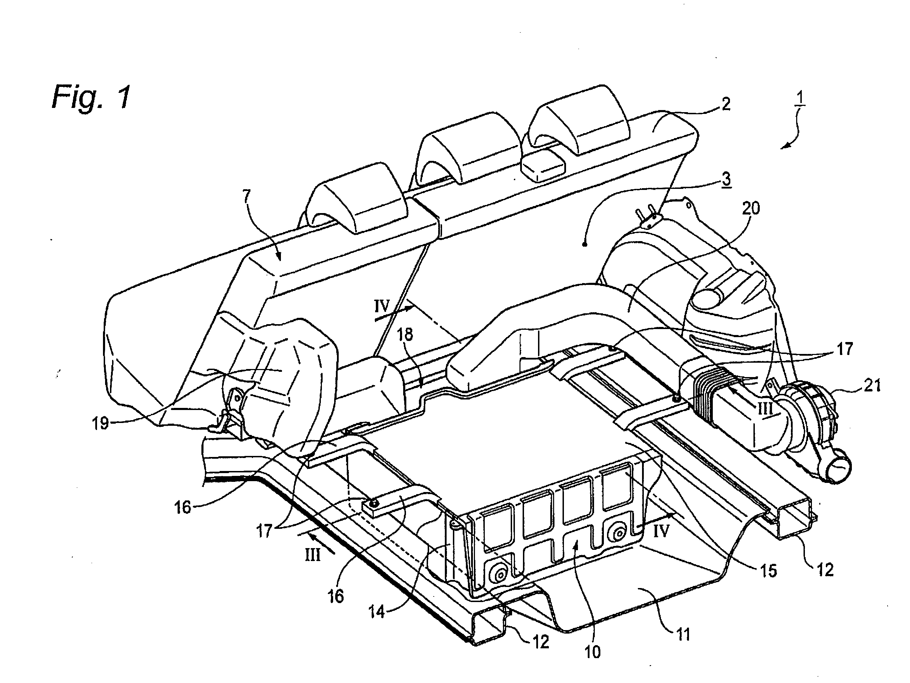

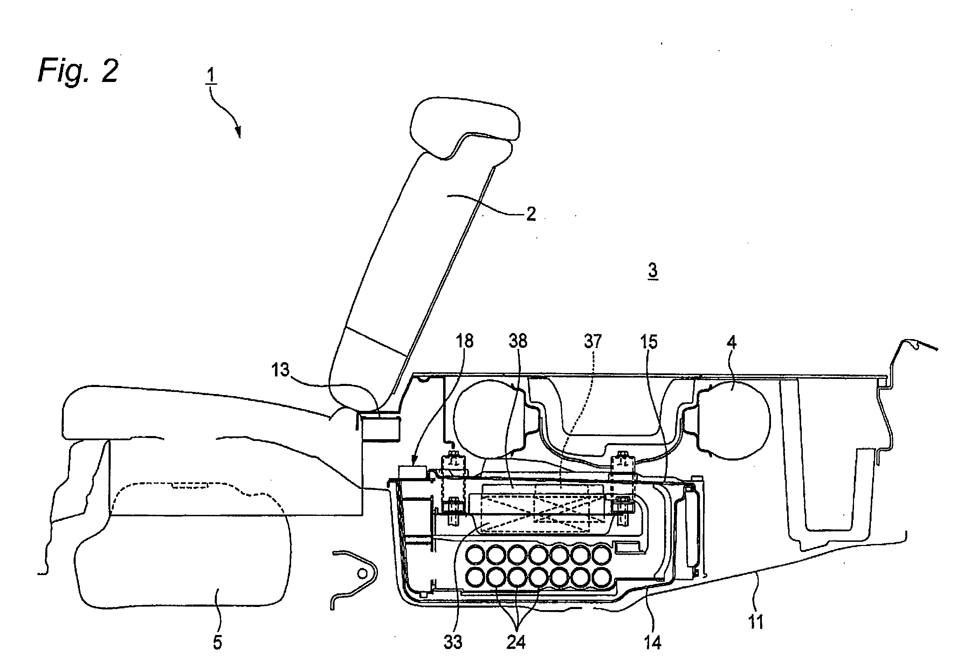

As shown in FIGS. 1 and 2, a power source unit 10 for operating a motor generator of a hybrid vehicle 1 is accommodated in a lower part of a luggage space 3 behind a backseat 2 by utilizing a tire pan 11 for accommodating a spare tire 4. The tire pan 11 in the shape of a downwardly concave container has left and right side edges connected to left and right rear side frames 12 and 12, and has a front edge connected to a cross member 13 (see FIG. 2) which is spanned between the rear side frames 12 and 12 in a vehicle width direction.

The power source unit 10 includes a waterproof case 14 in the shape of a container with an opened upper surface, and a lid member 15 having a flat plate-like portion which closes the upper surface opening portion. Both end portions in the vehicle width direction of a front and rear pair of suspending frames 16 and 16 which are sandwiched between the waterproof case 14 and the lid member 15, and extend in the vehicle width direction are fixed to the upper surfaces of the left and right rear side frames 12 and 12 using bolts 17. Accordingly, the power source unit 10 is suspended and supported by the left and right rear side frames 12 and 12 via the front and rear pair of suspending frames 16 and 16.

A front edge of the lid member 15 extends beyond the front suspending frame 16, and a duct member 18 is accommodated in the waterproof case 14 at a position forward of the front suspending frame 16. To the duct member 18, there are connected an intake duct 19 for sucking air in a vehicle interior into the waterproof case 14 as cooling wind, and an exhaust duct 20 for exhausting the cooling wind having completed the cooling from the waterproof case 14. The intake duct 19 extends from a left front portion of the waterproof case 14 forwardly and upwardly of the left side of a body, while the exhaust duct 20 extends from the right front portion of the waterproof case 14 rearwardly of the right side surface of the body. At a rear end of the exhaust duct 20, an electrical fan 21 is provided, and the cooling wind is sucked into the intake duct 19 by a negative pressure generated by the fan 21. It is to be noted that the cooling wind exhausted from the intake duct 19 is exhausted to a space between an interior material of the luggage space 3 and a rear fender, and a part thereof is returned into the vehicle interior and a part thereof is exhausted to the outside of the vehicle. It is to be noted that, in FIG. 2, a reference numeral 5 denotes a fuel tank.

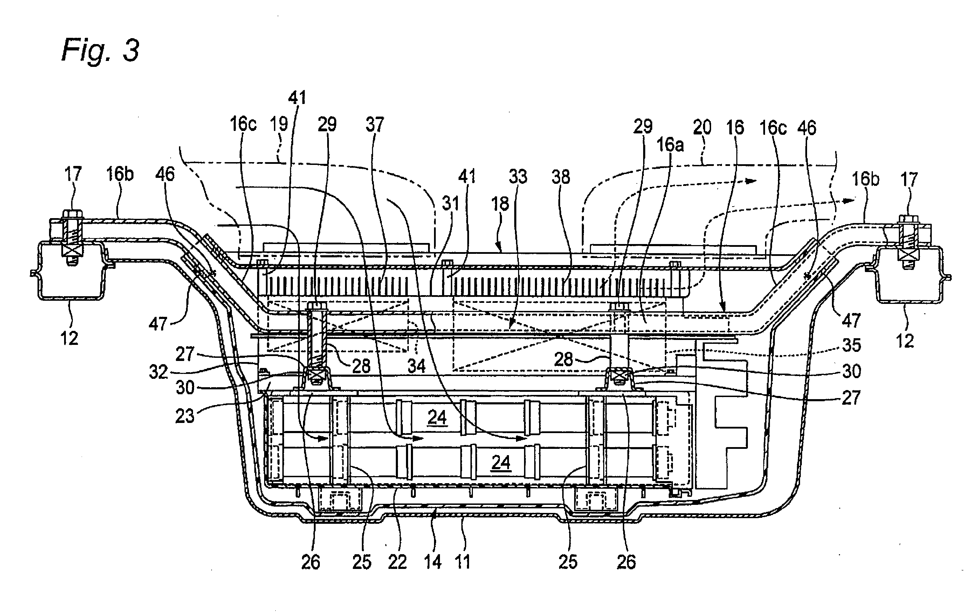

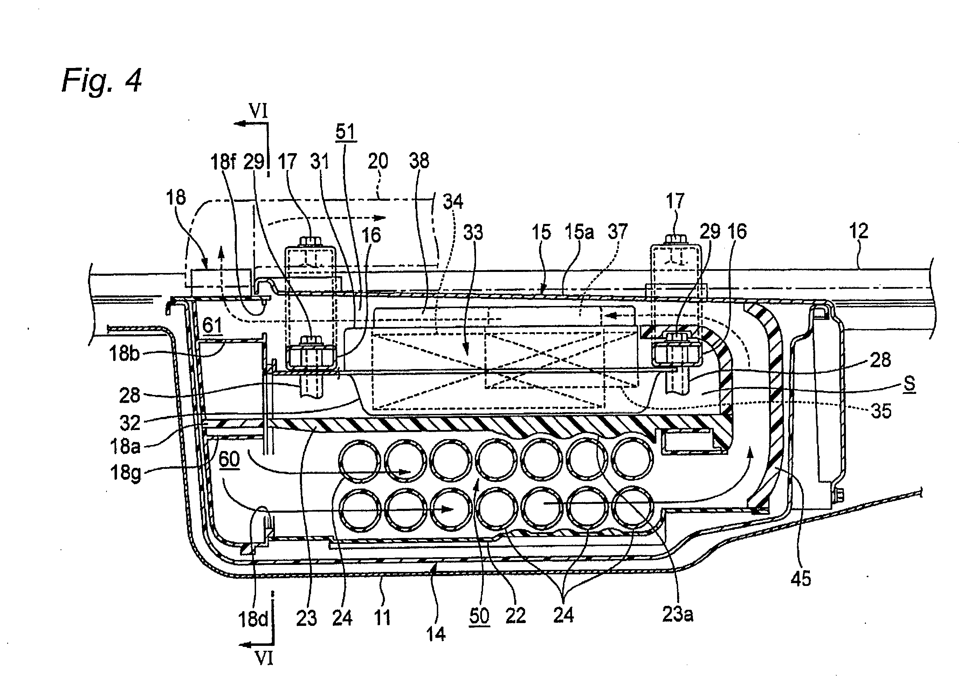

As shown in FIGS. 3 and 4, on a bottom side of the waterproof case 14, a lower battery case 22 and an upper battery case 23 constituting a first cooling path 50 are so disposed as to form a space for accommodating a plurality of battery modules 24 therebetween. Each of the battery modules 24 is formed into a stick-like shape by connecting a plurality of battery cells in series in the vehicle width direction, and these batter modules 24 are arranged in seven rows in a back-and-forth direction, and in two tiers in a vertical direction. In addition, these battery modules 24 are accommodated inside the lower battery case 22 and the upper battery case 23 such that the battery modules 24 are bound by a front and rear pair of U-shaped lower battery supporting frames 25 and 25, and a front and rear pair of I-shaped upper battery supporting frames 26 and 26. It is to be noted that, on an undersurface of the upper battery case 23, at a position on a downstream side of the first cooling path 50, there is provided a concave and convex bump portion 23a which is so curved as to reduce a flow path cross-sectional area.

A right and left pair of brackets 27 and 27 provided on upper surfaces of the individual upper battery supporting frames 26 and 26 and the suspending frames 16 and 16 are connected with each other using long bolts 29 and 29 having collars 28 and 28 fitted around their outer peripheries and nuts 30 and 30 screwed on lower ends thereof. Consequently, it follows that fourteen battery modules 24 in total are suspended and supported by the front and rear suspending frames 16 and 16 using the four bolts 29.

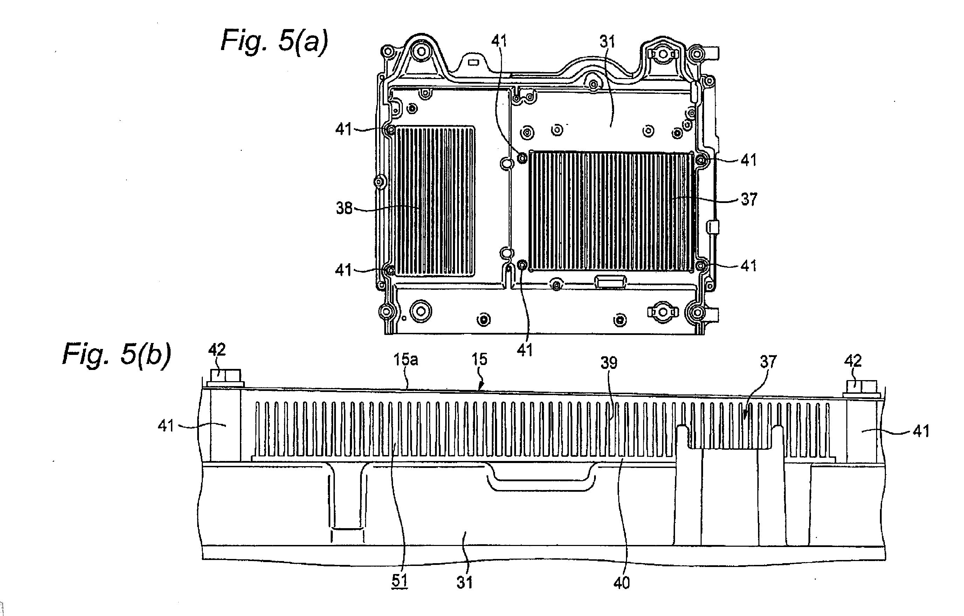

On an upper surface of the upper battery case 23, there is fixed an electrical component case 33 constituted of an upper electrical component case 31 and a lower electrical component case 32, and high-voltage electrical components such as an inverter 34 and a DC/DC converter 35 are parallely disposed on the right and left in the vehicle width direction inside the electrical component case 33. Further, on the side of the electrical component case 33 opposite to the side with the battery module 24, i.e., on an upper surface of the upper electrical component case 31, heat sink units 37 and 38 are attached. As shown in FIGS. 3 to 5(b), the heat sink units 37 and 38 are constituted of a heat radiating plate 40 having a plurality of heat radiating fins 39, and the heat radiating plate 40 is fixed on the upper surface of the upper electrical component case 31 such that a longitudinal direction of each heat radiating fin 39 is oriented along a passage direction of the cooling wind of a second cooling path 51.

In addition, on the upper surface of the upper electrical component case 31, a plurality of boss portions 41 for attaching the lid member 15 are provided to protrude at positions avoiding the heat sink units 37 and 38, and the lid member 15 is fixed on the upper surfaces thereof using bolts 42. Accordingly, between the upper electrical component case 31 and the lid member 15, the second cooling path 51 is formed, and the lid member 15 forms a wall surface of the second cooling path 51. The plurality of boss portions 41 are formed to become longer toward the downstream side of the second cooling path 51 so that the lid member 15 has an inclined portion 15a upwardly inclined toward the downstream side of the second cooling path 51.

As shown in FIG. 4, at the rear of the waterproof case 14, there is provided an intermediate duct 45 curved into a substantially U shape which connects a downstream end of the first cooling path 50 and an upstream end of the second cooling path 51. One end portion of the intermediate duct 45 is continuously connected to the upper battery case 23 on the inside thereof, and continuously connected to the lower battery case 22 on the outside thereof, while the other end portion thereof is continuously connected to the upper electrical component case 31 on the inside thereof, and continuously connected to the lid member 15 on the outside thereof. In this manner, since the intermediate duct 45 is formed into the substantially U shape smoothly curved from the downstream end of the first cooling path 50 to the upstream end of the second cooling path 51, it is possible to smoothly guide the cooling wind from the first cooling path 50 to the second cooling path 51.

As shown in FIG. 3, each of the suspending frames 16 and 16 has a central first horizontal portion 16a for suspending and supporting the battery modules 24, second horizontal portions 16b and 16b on both ends, and inclined portions 16c and 16c which connect the first horizontal portion 16a and the second horizontal portion 16b, and are inclined such that the height of outside portions in the vehicle width direction is increased, and each of the suspending frames 16 and 16 extends outside of the waterproof case 14 at the inclined portions 16c and 16c. The waterproof case 14 and the lid member 15 cover the outer periphery of the suspending frame 16 at a position where the inclined portion 16c of the suspending frame 16 extends outside, and are fixed to the inclined portion 16c by a fastening member 46 constituted of a bolt and a nut. With this arrangement, it is possible to convey a load imposed on the lid member 15 to the suspending frame 16, and disperse the load. In addition, between the inclined portion 16c and each of the waterproof case 14 and the lid member 15, a seal member 47 formed of a foamable synthetic resin is sandwiched, and it is possible to cause the seal member 47 to exert a sealing function.

Further, the first horizontal portion 16a is caused to pass below the heat sink units 37 and 38 at a side position of the electrical component case 33 and, in particular, the suspending frame 16 on the rear is disposed in a space S defined between the intermediate duct 45, the upper battery case 23, and the electrical component case 33 of the electrical component. With this arrangement, the cooling wind of the second cooling path 51 is not blocked, and the thickness of the power source unit 10 is not increased by the height of the suspending frame 16.

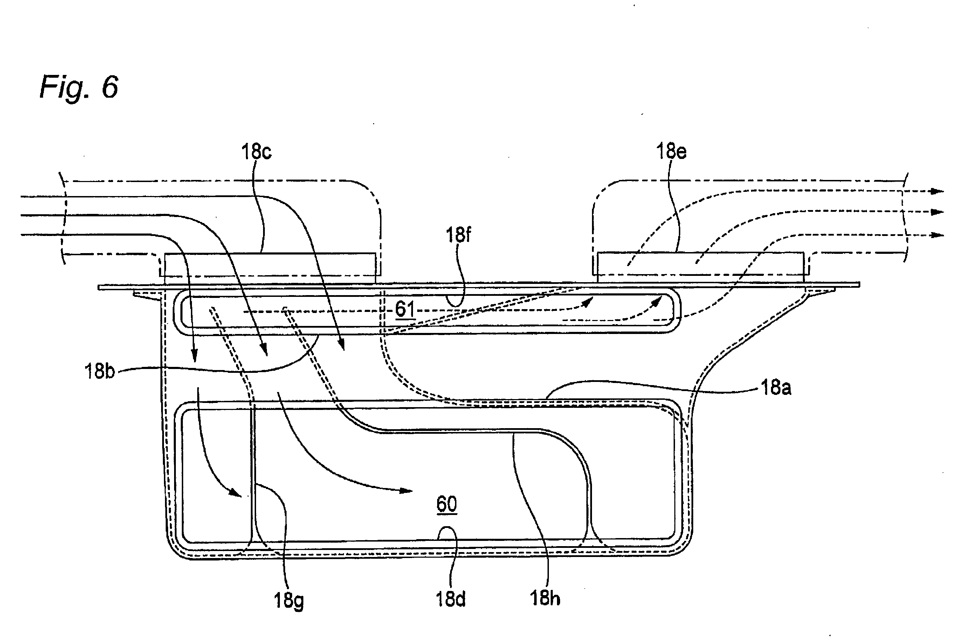

Furthermore, in the duct member 18 provided in the front portion of the waterproof case 14, the inside thereof is partitioned into an intake path portion 60 and an exhaust path portion 61 by partition walls 18a and 18b. As shown in FIG. 6, on the left side of a flat upper surface of the duct member 18, an inlet opening 18c as an upstream end of the intake path portion 60 is formed and, in a lower portion of a flat rear surface thereof, outlet openings 18d, which are divided into three portions, as a downstream end of the intake path portion 60 are formed. In addition, on the right side of the flat upper surface of the duct member 18, an outlet opening 18e as a downstream end of the exhaust path portion 61 is formed and, on an upper side of the flat rear surface thereof, an inlet opening 18f is formed. To the inlet opening 18c of the intake path portion 60 of the duct member 18, a downstream end of the intake duct 19 is connected and, to the outlet opening 18e of the exhaust path portion 61 of the duct member 18, an upstream end of the exhaust duct 20 is connected.

The width of the outlet openings 18d of the intake path portion 60 in the vehicle width direction is substantially equal to the width of the duct member 18 in the vehicle width direction, and corresponds with the width of the first cooling path 50 in the waterproof case 14 in the vehicle width direction. The reason why the outlet opening 18d of the intake path portion 60 is divided into three portions is to avoid positions of the pair of lower battery supporting frames 25 and 25 which bind the battery modules 24. The inside of the intake path portion 60 of the intake path member 18 is divided into three paths by two guide walls 18g and 18h, and the three paths correspond to the outlet openings 18d which are divided into three portions in the intake path portion 60.

Next, a description will be given of an operation of the embodiment of the present invention having the above-described configuration.
When the motor generator of the hybrid vehicle is driven, the high-voltage electrical component including the battery modules 24, the inverter 34, and the DC/DC converter 35 generates heat. When the cooling fan 21 is driven, by the negative pressure generated on the upstream side thereof, the air in the vehicle interior is sucked from the intake duct 19 into the duct member 18 as the cooling wind. The cooling wind flows rearwardly from the lower portion of the duct member 18 to cool the battery modules 24 while flowing through the first cooling path 50 formed by the lower battery case 22 and the upper battery case 23. Further, while the cooling wind passes through the intermediate duct 45, and is guided into the second cooling path 51 formed by the upper electrical component case 31 and the lid member 15, the cooling wind comes into contact with the protruding heat sink units 37 and 38 to cool the inverter 34 and the DC/DC converter 35. The cooling wind having completed the cooling flows into the exhaust duct 20 from the upper portion of the duct member 18, and is exhausted to the vehicle interior and to the outside of the vehicle interior after passing through the fan 21.

Consequently, after the cooling fan 21 is stopped, the air heated by the contact with the relatively high-temperature inverter 34 and DC/DC converter 35 does not flow toward the side with the relatively low-temperature battery modules 24 positioned on the lower side, but is exhausted from the exhaust path portion 61 of the duct member 18 so that it is possible to facilitate heat radiation inside the waterproof case 14 while preventing a reduction in the durability of the battery modules 24.

As has been described thus far, according to the cooling structure for the vehicle power source unit 10 of the present embodiment, the electrical component disposed on the top of the battery modules 24 includes the electrical component case 33 for accommodating the inverter 34 and the DC/DC converter 35, and the heat sink units 37 and 38 which are attached to the electrical component case 33 on the side of the electrical component case 33 opposite to the side with the battery modules 24, and are constituted of the heat radiating plate 40 having the plurality of heat radiating fins 39. Further, the cooling path includes the first cooling path 50 for cooling the battery modules 24 using the cooling wind, and the second cooling path 51 for cooling the heat sink units 37 and 38 using the cooling wind having passed through the first cooling path 50. With this arrangement, since the space for protecting the electrical component is formed by the second cooling path 51, unlike conventional cooling structures, it is not necessary to provide a space between the lid member, and the inverter and the DC/DC converter of the power source unit, and it is possible to reduce the height of the power source unit 10, and cool the battery modules 24 and the electrical component including the inverter 34 and the DC/DC converter 35 with the compact configuration. In addition, it is possible to dispose the electrical component case 33 at a position close to the battery modules 24, and thereby lower the center of gravity.

Since each of the suspending frames 16 and 16 to which the power source unit 10 is attached has the first horizontal portion 16a passing below the heat sink units 37 and 38, it is possible to cause the suspending frames 16 and 16 to pass below the second cooling path 51 so that the thickness of the power source unit 10 is not increased by the height of each of the suspending frames 16 and 16, and it is possible to reduce the height of the power source unit 10, and lower the center of gravity.

In addition, since the cooling path is configured such that, after passing through the first cooling path 50 for cooling the battery modules 24, the cooling wind passes through the second cooling path 51 for cooling the heat sink units 37 and 38 via the intermediate duct 45 in the substantially U shape, and the rear suspending frame is disposed in the space S defined between the intermediate duct 45, the upper battery case 23 covering the battery modules 24, and the electrical component case 33 of the electrical component, the suspending frame 16 can effectively utilize a dead space between the intermediate duct 45, the battery modules 24, and the electrical component, and the power source unit 10 can be thereby reduced in size.

Further, above the electrical component, since the lid member 15 forming the wall surface of the second cooling path has the inclined portion 15a which is inclined upwardly toward the downstream side of the second cooling path 51, warm air flows upwardly along the inclined portion 15a, and a natural convection effect can be enhanced.

### <Second Embodiment>

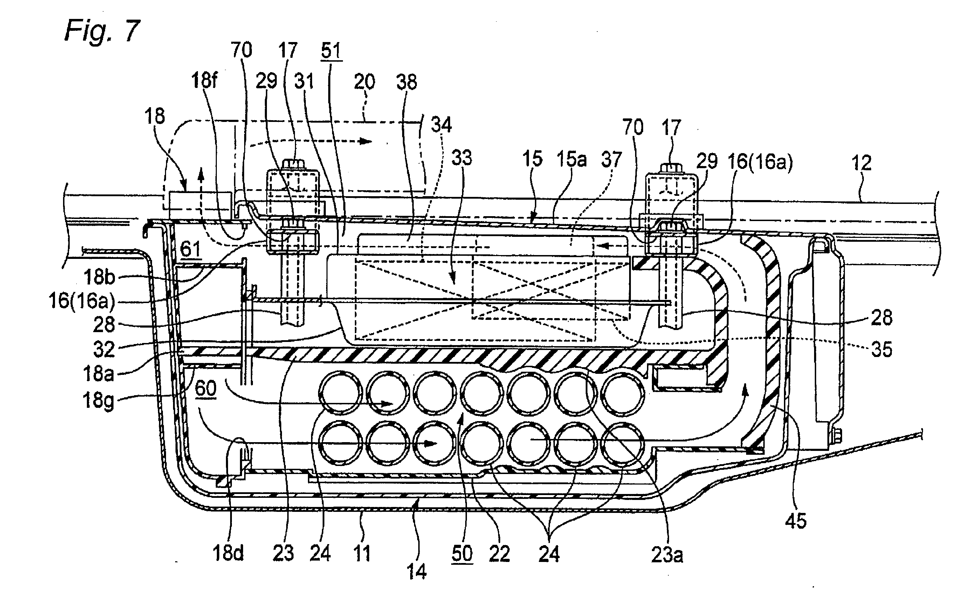

Next, a description will be given of a cooling structure for a vehicle power source unit according to a second embodiment of the present invention with reference to FIG. 7. It is to be noted that portions which are the same as or equivalent to those in the first embodiment are designated by the same reference numerals and the description thereof will be omitted.

In the present embodiment, the first horizontal portion 16a of each suspending frame 16 is disposed inside the second cooling path 51 and, in order to cause the cooling wind inside the second cooling path 51 to pass therethrough, in the first horizontal portion 16a, a through hole 70 is formed in the fore-and-aft direction of the vehicle, i.e., in a short side portion in a rectangular cross section of the first horizontal portion 16a. With this arrangement, similarly to the first embodiment, since the thickness of the power source unit 10 is not increased by the height of the suspending frame 16, and it is possible to reduce the height of the power source unit 10 and cause the suspending frame 16 to receive heat, cooling efficiency can be enhanced. It is to be noted that the shape of the through hole 70 can be arbitrarily designed in consideration of cooling performance and frame rigidity, and the through hole 70 may be divided and a plurality of through holes may be provided. In addition, in this case, while the collars 28 and each bolt 29 for supporting the battery modules 24 on the suspending frame 16 are longer than those in the first embodiment, the inclined portion 16c of the suspending frame 16 is shorter than that in the first embodiment.

### <Third Embodiment>

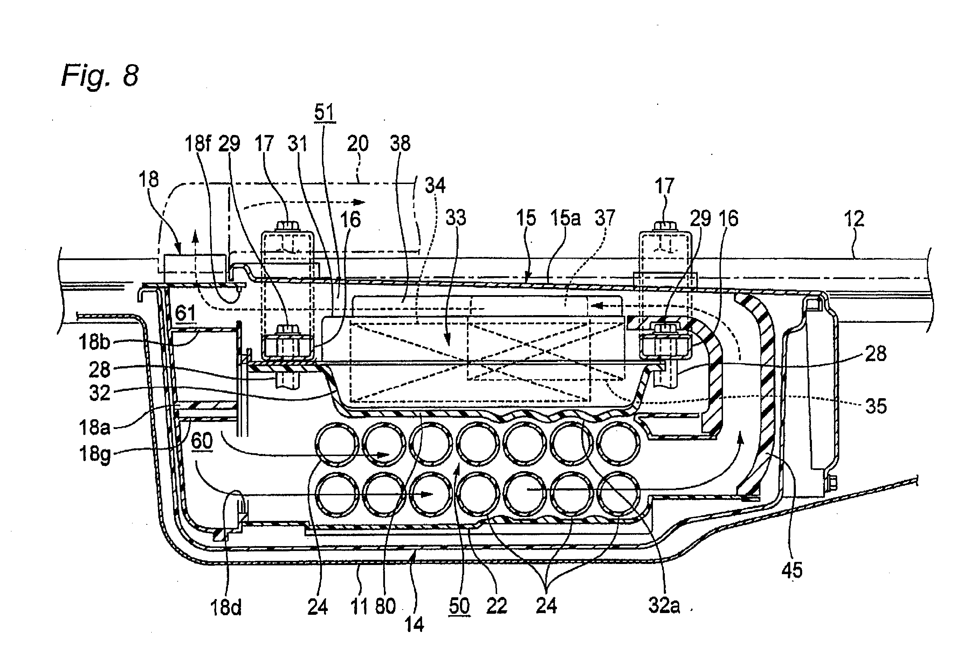

Next, a description will be given of a cooling structure for a vehicle power source unit according to a third embodiment of the present invention with reference to FIG. 8. It is to be noted that portions which are the same as or equivalent to those in the first embodiment are designated by the same reference numerals and the description thereof will be omitted.

In the present embodiment, the upper battery case 23 is formed of a foamable synthetic resin 80 stuck to the undersurface of the lower electrical component case 32. In addition, on a surface of the lower electrical component case 32 on the side with the battery module, there is formed a concave and convex bump portion 32a so curved as to reduce a flow path cross-sectional area at a position on the downstream side of the first cooling path 50. With this arrangement, it is possible to increase a flow speed of the first cooling path 50 by the bump portion 32a, and thereby enhance the cooling performance. Further, the formation of the bump portion 32a by the lower electrical component case 32 allows a reduction of the power source unit 10 in size.

It is to be noted that the present invention is not limited to the above-described embodiments, and changes and modifications can be made appropriately.

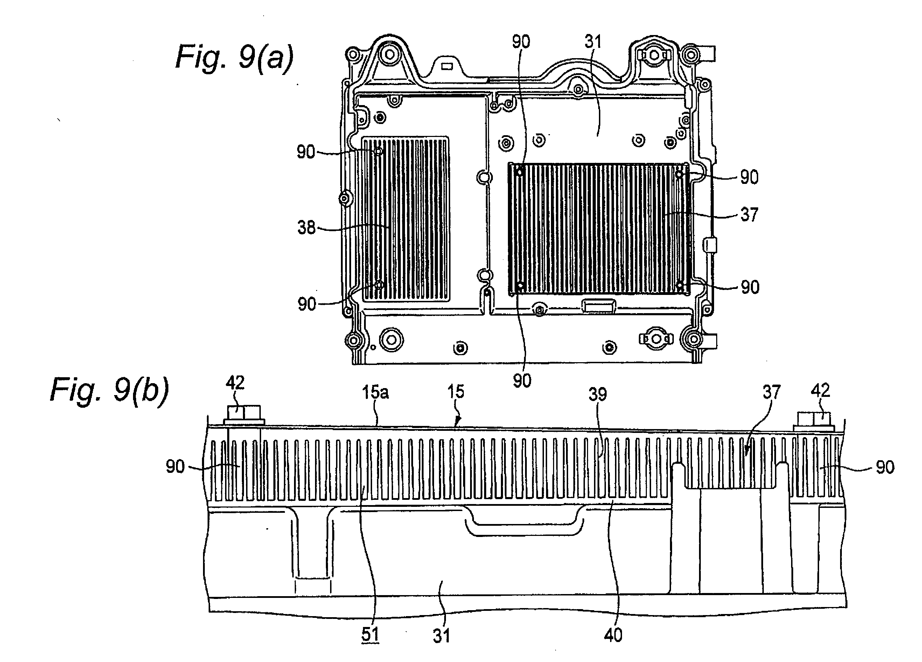

For example, although the upper electrical component case 31 has the boss portion 41 for fixing the lid member 15 in the above-described embodiments, as shown in FIGS. 9(a) and 9(b), each of the heat sink units 37 and 38 may have a boss portion 90. With this arrangement, it is possible to cause the lid member 15 to receive heat from the heat sink units 37 and 38, and thereby enhance the cooling efficiency.

Further, in the present embodiments, although the description has been given of the hybrid vehicle as a vehicle to which the present invention is applied, the present invention is not limited thereto, and the vehicle may also be, e.g., an electric automobile which uses only a motor as a drive source.

### Explanations of Letters or Numerals

- 1: hybrid vehicle
- 3: luggage space
- 10: power source unit
- 12: rear side frame
- 15: lid member
- 15a: inclined portion
- 16: suspending frame
- 16a: first horizontal portion
- 23a, 32a: bump portion
- 24: battery module
- 33: electrical component case
- 34: inverter
- 35: DC/DC converter
- 37, 38: heat sink unit
- 39: heat radiating fin
- 40: heat radiating plate
- 41, 90: boss portion
- 45: intermediate duct
- 50: first cooling path
- 51: second cooling path
- 70: through hole
- S: space

## Claims

1. A cooling structure for a vehicle power source unit (10) comprising :
a power source unit constituted of a power storage device (24) and an electrical
component disposed on a top of the power storage device and including at least an inverter (34), the power source unit being disposed under a floor of a luggage room (3) provided in a vehicle; and
a cooling path (50, 51) formed in the power source unit to cool the power storage device and the electrical component using cooling wind,
wherein
the electrical component includes an electrical component case (33) for accommodating the inverter, and a heat sink unit (37, 38) includes a heat radiating plate (40) having a plurality of heat radiating fins (39), **characterized in that**
the heat sink unit is attached to the electrical component case on a side of the
electrical component case opposite to a side with the power storage device, and
the cooling path includes a first cooling path (50) for cooling the power storage device using the cooling wind, and a second cooling path (51) for cooling the heat sink unit using the cooling wind passed through the first cooling path.

2. The cooling structure for the vehicle power source unit according to claim 1, wherein
a sub frame (16) is attached to a pair of side frames (12) disposed on both sides in a vehicle width direction such that the sub frame is generally orthogonal to a longitudinal direction of each of the side frames,
the power source unit is attached to the sub frame, and
the sub frame includes a portion passing below the heat sink unit.

3. The cooling structure for the vehicle power source unit according to claim 2, **characterized in that**
the cooling path is so configuredas to pass through the heat sink unit via an intermediate duct (45) in a generally U shape after passing through the power storage device,
the sub frame includes a plurality of sub frames, and
at least one of the plurality of sub frames is disposed in a space defined between the intermediate duct, the power storage device, and the electrical component.

4. The cooling structure for the vehicle power source unit according to claim 1, wherein
a sub frame is attached to a pair of side frames disposed on both sides in a vehicle width direction such that the sub frame is substantially orthogonal to a longitudinal direction of each of the side frames,
the power source unit is attached to the sub frame, and
the sub frame is disposed in the cooling path, and includes a through hole (70) for causing the cooling wind to pass through the through hole.

5. The cooling structure for the vehicle power source unit according to any one of claims 1 to 4, wherein
a cover (15) for the power source unit forming a wall surface of the second cooling
path is provided above the electrical component, and
the heat sink unit includes a fixing portion (90) for fixing the cover.

6. The cooling structure for the vehicle power source unit according to any one of claims 1 to 4, wherein
a cover for the power source unit forming a wall surface of the second cooling path is provided above the electrical component, and
the cover includes an inclined portion (15a) inclined upwardly toward a downstream side of the second cooling path.

7. The cooling structure for the vehicle power source unit according to any one of claims 1 to 5, wherein
a swelled portion (32a) is provided on a downstream side of the first cooling path such that a flow path cross-sectional area is reduced, and
the swelled portion is formed on a surface on a power storage device side of the electrical component case.

## Patentansprüche

1. Kühlanordnung für eine Fahrzeugenergiequelleneinheit (10) aufweisend:
eine Energiequelleneinheit, die durch eine Energiespeichereinheit (24) und eine elektrische Komponente gebildet wird, die auf der
Energiespeichervorrichtung angeordnet ist und wenigstens einen Inverter (34) umfasst, wobei die
Energiequelleneinheit unterhalb eines Bodens eines Gepäckraums (3) angeordnet ist, der in einem Fahrzeug vorgesehen ist; und
einen Kühlweg (50, 51), der in der Energiequelleneinheit gebildet ist, um die Energiespeichervorrichtung und die elektrische Komponente durch Verwenden von Kühlwind zu kühlen,
wobei
die elektrische Komponente ein elektrische Komponenten-Gehäuse (33) zum Aufnehmen des Inverters aufweist und
wobei eine Wärmesenkeneinheit (37, 38) eine wärmeabstrahlende Platte (40) umfasst, die eine Mehrzahl von Wärmestrahlungsrippen (39) hat, **dadurch gekennzeichnet, dass**
die Wärmesenkeneinheit an dem elektrische Komponente-Gehäuse auf einer Seite des elektrische Komponente-Gehäuses befestigt ist, die einer Seite mit der Energiespeichervorrichtung gegenüberliegt, und
der Kühlweg einem ersten Kühlweg (50) zum Kühlen der Energiespeichervorrichtung hat, die Kühlwind verwendet, und einen zweiten Kühlweg (51) zum Kühlen der Wärmensenkeneinheit, die den Kühlwind verwendet, der den ersten Kühlweg passiert hat.

2. Kühlanordnung für eine Fahrzeugenergiequelleneinheit gemäß Anspruch 1,
wobei
ein Teilrahmen (16) an einem Paar von Seitenrahmen (12) befestigt ist, die auf beiden Seiten in einer Fahrzeugbreitenrichtung so angeordnet sind, dass der Teilrahmen grundsätzlich orthogonal zu einer Längsrichtung der beiden Seitenrahmen verläuft,
die Energiequelleneinheit an dem Teilrahmen befestigt ist, und
der Teilrahmen einen Abschnitt umfasst, der unter der Wärmesenkeneinheit verläuft.

3. Kühlanordnung für eine Fahrzeugenergiequelleneinheit gemäß Anspruch 2,
**dadurch gekennzeichnet, dass**
der Kühlweg so eingerichtet ist, dass er durch die Wärmensenkeneinheit über einen Zwischenkanal (45) in einer grundsätzlichen U-Form verläuft, nachdem er durch die Energiespeichervorrichtung verläuft,
der Teilrahmen eine Mehrzahl von Teilrahmen umfasst, und wenigstens einer der mehreren Teilrahmen in einem Raum angeordnet ist, der zwischen dem Zwischenkanal, der Energiespeichervorrichtung und der elektrischen Komponente definiert ist.

4. Kühlanordnung für eine Fahrzeugenergiequelleneinheit gemäß Anspruch 1,
wobei
ein Teilrahmen an einem Paar von Seitenrahmen befestigt ist, die auf beiden Seiten in einer
Fahrzeugbreitenrichtung so angeordnet sind, dass der Teilrahmen im Wesentlichen orthogonal zu einer Längsrichtung von jedem der Seitenrahmen ist,
die Energiequelleneinheit an dem Teilrahmen befestigt ist, und
der Teilrahmen in dem Kühlweg angeordnet ist und ein Durchgangsloch (70) aufweist, um zu verursachen, dass Kühlwind durch das Durchgangsloch tritt.

5. Kühlanordnung für eine Fahrzeugenergiequelleneinheit gemäß einem der Ansprüche 1-4, wobei
eine Abdeckung (15) für die Energiequelleneinheit oberhalb der elektrischen Komponente vorgesehen ist, wobei die Abdeckung eine Wandfläche des zweiten Kühlwegs bildet, und die Wärmesenkeneinheit einen Befestigungsabschnitt (90) zum Befestigen der Abdeckung umfasst.

6. Kühlanordnung für eine Fahrzeugenergieeinheit gemäß einem der Ansprüche 1-4, wobei
eine Abdeckung für die Energiequelleneinheit oberhalb der elektrischen Komponente vorgesehen ist, wobei die Abdeckung eine Wandfläche des zweiten Kühlwegs bildet, und die Abdeckung einen geneigten Abschnitt (15a) umfasst, der aufwärts in Richtung einer stromabwärtigen Seite des zweiten Kühlwegs geneigt ist.

7. Kühlanordnung für eine Fahrzeugenergiequelleneinheit gemäß einem der Ansprüche 1-5,
wobei ein ausgewölbter Abschnitt (32a) auf einer stromabwärtigen Seite des ersten Kühlwegs so vorgesehen ist, dass ein Querschnitt des Strömungswegs reduziert ist, und
der ausgewölbte Abschnitt an einer Oberfläche auf der Energiespeichervorrichtungsseite des elektrischen Komponente-Gehäuses ausgebildet ist.

## Revendications

1. Structure de refroidissement destinée à une source d'alimentation de véhicule (10) qui comprend :
une source d'alimentation composée d'un dispositif de stockage d'énergie (24) et d'un composant électrique disposé sur le dessus dudit dispositif de stockage d'énergie et comprenant au moins un inverseur (34), ladite source d'alimentation étant disposée sous le plancher d'un coffre à bagages (3) prévu dans ledit véhicule ; et
un trajet de refroidissement (50, 51) formé dans ladite unité d'alimentation afin de refroidir ledit dispositif de stockage d'énergie et ledit composant électrique à l'aide d'un courant d'air de refroidissement,
dans laquelle
ledit composant électrique comprend un logement de composant électrique (33) destiné à contenir ledit inverseur, et un dissipateur thermique (37, 38) comprend une plaque de rayonnement thermique (40) ayant une pluralité d'ailettes de rayonnement thermique (39), **caractérisée en ce que**
ledit dissipateur thermique est relié audit logement de composant électrique sur un côté dudit logement de composant électrique opposé à un côté ayant ledit dispositif de stockage d'énergie, et
ledit trajet de refroidissement comprend un premier trajet de refroidissement (50) destiné à refroidir ledit dispositif de stockage d'énergie à l'aide dudit courant d'air de refroidissement, et un second trajet de refroidissement (51) destiné à refroidir ledit dissipateur thermique à l'aide dudit courant d'air de refroidissement qui passe dans ledit premier trajet de refroidissement.

2. Structure de refroidissement destinée à une source d'alimentation de véhicule selon la revendication 1, dans laquelle
un sous-châssis (16) est relié à une paire de châssis latéraux (12) disposés des deux côtés dans la direction de la largeur duit véhicule de sorte que ledit sous-châssis soit généralement orthogonal par rapport à une direction longitudinale de chacun desdits châssis latéraux,
ladite source d'alimentation est reliée audit sous-châssis, et
ledit sous-châssis comprend une partie qui passe sous ledit dissipateur thermique.

3. Structure de refroidissement destinée à une source d'alimentation de véhicule selon la revendication 2, **caractérisée en ce que**
ledit trajet de refroidissement est configuré de façon à traverser ledit dissipateur thermique via un conduit intermédiaire (45) généralement en forme de U après avoir traversé ledit dispositif de stockage de l'énergie,
ledit sous-châssis comprend une pluralité de sous-châssis, et
au moins l'un de ladite pluralité de sous-châssis est disposé dans un espace défini entre ledit conduit intermédiaire, ledit dispositif de stockage de l'énergie, et ledit composant électrique.

4. Structure de refroidissement destinée à une source d'alimentation de véhicule selon la revendication 1, dans laquelle
un sous-châssis est relié à une paire de châssis latéraux disposés des deux côtés dans la direction de la largeur dudit véhicule de sorte que ledit sous-châssis soit sensiblement orthogonal par rapport à une direction longitudinal de chacun desdits châssis latéraux,
ladite source d'alimentation est reliée audit sous-châssis, et
ledit sous-châssis est disposé dans ledit trajet de refroidissement, et comprend un trou traversant (70) destiné à faire passer ledit courant d'air de refroidissement à travers.

5. Structure de refroidissement destinée à une source d'alimentation de véhicule selon l'une quelconque des revendications 1 à 4, dans laquelle
un capot (15) destiné à ladite source d'alimentation et qui forme une surface de paroi dudit second trajet de refroidissement est prévu au-dessus dudit composant électrique, et
ledit dissipateur thermique comprend une partie de fixation (90) destinée à fixer ledit capot.

6. Structure de refroidissement destinée à une source d'alimentation de véhicule selon l'une quelconque des revendications 1 à 4, dans laquelle
un capot destiné à ladite source d'alimentation et qui forme une surface de paroi dudit second trajet de refroidissement est prévu au-dessus dudit composant électrique, et
ledit capot comprend une partie inclinée (15a) qui est inclinée vers le haut, vers un côté aval dudit second trajet de refroidissement.

7. Structure de refroidissement destinée à une source d'alimentation de véhicule selon l'une quelconque des revendications 1 à 5, dans laquelle
une partie gonflée (32a) est prévue sur un côté aval dudit premier trajet de refroidissement de sorte qu'une surface transversale de trajet d'écoulement soit réduite, et
ladite partie gonflée est formée sur une surface sur un côté dispositif de stockage de l'énergie dudit logement de composant électrique.
